Europäisches Patentamt

European Patent Office

Office européen des brevets

(11) Publication number: **0 059 562**
**B1**

(12) **EUROPEAN PATENT SPECIFICATION**

(45) Date of publication of patent specification: **28.05.86**

(51) Int. Cl.⁴: **F 02 M 35/024, B 01 D 46/52**

(21) Application number: **82300832.1**

(22) Date of filing: **18.02.82**

(54) **Fluid cleaner systems.**

(30) Priority: **23.02.81 JP 25140/81**
**23.02.81 JP 25141/81**
**25.02.81 JP 27242/81**
**28.10.81 JP 172429/81**
**28.10.81 JP 172430/81**
**28.10.81 JP 172431/81**

(43) Date of publication of application:
**08.09.82 Bulletin 82/36**

(45) Publication of the grant of the patent:
**28.05.86 Bulletin 86/22**

(84) Designated Contracting States:
**DE FR GB**

(56) References cited:
**FR-A- 883 049**
**FR-A- 2 063 849**
**GB-A- 565 265**
**GB-A- 1 331 175**
**US-A- 2 720 279**
**US-A- 2 731 108**
**US-A- 2 843 218**
**US-A- 3 859 068**

(73) Proprietor: **NIPPONDENSO CO., LTD.**
**1, 1-chome, Showa-cho**
**Kariya-shi Aichi-ken (JP)**

(72) Inventor: **Miyakawa, Susumu**
**12 Tennocho-7-chome**
**Kariya-shi (JP)**
Inventor: **Fukuta, Toshiaki**
**5-54 Sumiyoshicho-2-chome**
**Anjo-shi (JP)**
Inventor: **Akado, Hajime**
**103 Higashishojisaku**
**Izumicho Anjo-shi (JP)**
Inventor: **Taki, Yoshihiro**
**62-2 Ogatayama Narumicho**
**Midori-ku Nagoya (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to fluid cleaner systems of the kind having a cylindrical filter element suitable for use in removing minuscule particles of dust and foreign matter contained in the air drawn by suction.

Heretofore, filter elements of air cleaners for use with internal combustion engines have usually been folded elements of the chrysanthemum petal type produced by folding filter paper or non-woven cloth alternately in opposite directions such as shown in FR—A—883049. In view of this construction, it has been necessary to increase the height if it is desired to increase the filtering area of such filter elements. This entails an increase in the size of the filter elements and hence that of the air cleaners, making it impossible to satisfy the technical demands of reducing the size and weight and prolonging the service life of engines.

In the air cleaners with such filter elements of chrysanthemum petal type, the air to be cleaned flows in a current passing from the outer periphery of the element to the inner periphery thereof. This makes it necessary to provide a space of a relatively large area in the outer peripheral portion and the inner peripheral portion. Because of this, the filter elements of the prior art have suffered the disadvantage that the air cleaner and hence the engine becomes large in size.

GB—A—565265 discloses an air cleaner system in which the filter is formed by a plurality of rings which are located in grooves formed in the bottom of a dish shaped casing closed by a disc cover having grooves on its underside in which the rings of the filter are located. The bottom of the casing and the cover are provided with a plurality of perforations through which the air flows. However in this known air cleaner all of the upper and lower edges of the filter element are held in the respective grooves of the casing and cover and the air has to flow through the perforations which cause resistance to air flow. Air flow resistance is especially critical in air cleaners of an internal combustion engine due to its adverse effect on engine performance. In this prior art specification it is stated that instead of having perforations it is possible to have arcuate slots between the ends of which are left webs of sufficient length to give the desired strength and rigidity to the casing and cover. However, even if arcuate slots where provided, the resistance to air flow would still be considerable.

GB—A—1 331 175 discloses a fluid cleaner system comprising a casing and a cap coupled to each other for defining a filter chamber, a filter unit being disposed in the filter chamber and having a filter element having in radial section a wave form, the waves being annularly arranged around the centre of the filter element and the outer periphery of the filter is provided with sealing means disposed between the outer circular peripheral portion of the casing and the cap. The filter element is held only along its radially innermost and radially outermost peripheral portions.

FR—A—2 063 849 discloses an air cleaner in which the inner part of the filter is received in an annular channel provided in the casing and in an annular channel provided in the cover.

We also draw attention to our EP—A—0058994 which relates to and claims filter elements having two-dimensional wave forms, and to our EP—A—0068662 which claims a filter formed of a sheet folded to have two-dimensional wave forms.

According to the present invention there is provided a fluid cleaner system comprising a casing and a cap coupled to each other for defining a filter chamber; and a filter unit disposed in said filter chamber and having a filter element consisting of at least one folded sheet of filter material, said filter element having a wave form in radial sectional view, the waves being annularly arranged, characterized in that the filter element is supported on a support device which supports the filter element in the filter chamber, the support device comprising an inner frame having an inverted cup-like shape having an extension on the outer side of its wall, said extension having an annular groove with upstanding side walls, said support device further comprising an outer frame having an annular groove with upstanding side walls and having a circular flange extending radially outwardly from the outer wall of said annular groove, said circular flange being interposed between the outer circular peripheral portions of said casing and cap, the outer and inner frames being connected by a plurality of webs, the inner free end and the outer free end of the wave form of the filter element extending in a downward direction and being supported in the annular groove of the respective inner and outer frame.

Some embodiments of the invention will now be described, by way of examples, with reference to the accompanying drawings, in which:—

Figure 1 is a plan view of filter material used for producing a filter element;

Figure 2 is a perspective view of the filter material shown in Figure 1, shown in the folded condition;

Figure 3 is a perspective view of a cylindrical filter element produced by connecting together opposite ends of the filter material shown in the folded condition in Figure 2;

Figure 4 is a plan view of a filter material for producing another form of filter element;

Figure 5 is a perspective view, with certain parts being cut out, of a filter element produced by using the filter material shown in Figure 4;

Figure 6 is a perspective view, with certain parts being cut out, of a support device for mounting the filter element shown in Figure 5;

Figure 7 is a sectional view of a filter element comprising the filter element shown in Figure 5 and the end plate shown in Figure 22;

Figure 8 is a sectional view of the filter element assembly shown in Figure 7, incorporated in an air cleaner system of an internal combustion engine;

Figure 9 is a sectional view of another support device and filter element;

Figure 10 is a plan view of another form of filter material;

Figure 11 is a plan view of a half-portion of a filter element formed with the filter material shown in Figure 10;

Figure 12 is a perspective view, with certain parts being cut out, of a filter element formed by connecting a half-portion of another filter element of the same shape to the half-portion of the filter element shown in Figure 11;

Figure 13 is a perspective view, with certain parts being cut out, of a support device for supporting the filter element shown in Figure 12;

Figure 14 is a plan view of another form of filter material;

Figure 15 is a plan view of a filter element formed with the filter material shown in Figure 14;

Figure 16 is a perspective view, with certain parts being cut out, of a support device for supporting the filter element shown in Figure 15;

Figures 17 and 18 are fragmentary sectional views, on an enlarged scale, of the peripheral portion of a filter element, showing the manner in which the peripheral portion is sealed;

Figure 19 is a sectional view of a gasket used for sealing the peripheral portion of the filter element shown in Figure 18;

Figure 20 is a fragmentary sectional view, on an enlarged scale, showing another manner in which the peripheral portion of a filter element is sealed;

Figure 21 is a perspective view, with certain parts being cut out, of a support device for supporting the filter element shown in Figure 5;

Figure 22 is a sectional view of the assembly of the filter element shown in Figure 5 and the support device shown in Figure 21;

Figure 23 is a sectional view of an air cleaner system comprising the filter element assembly shown in Figure 22; and

Figure 24 is a perspective view, with certain parts being cut out, of another form of support device.

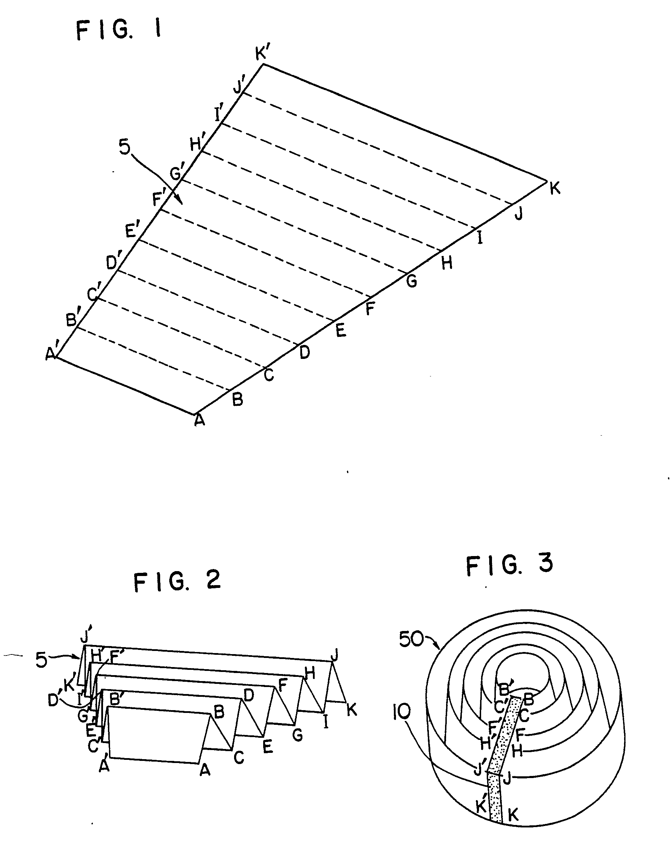

Figures 1 to 3 show a filter element of cylindrical shape. The filter material 5 is of a trapezoidal shape shown in Figure 1 is bent and folded along lines A—A', B—B' ... K—K' as shown in Figure 2, and then the folded filter material 5 is wound and connected at opposite ends with the adhesive agent 10, as shown in Figure 3 to form the cylindrical filter element 50. When the filter material 5 of the trapezoidal shape is used, it is possible to obtain tilting of the opposite ends of the cylindrical filter element 50 by varying the spacing intervals of the lines A—A', B—B', C—C' ... K—K'.

By using a filter material of a segmental shape in place of the trapezoidal filter material 5 shown in Figure 1, it is possible to wind the filter material more readily than the filter material 5 shown in Figure 1 if the lines B—B', C—C' ... K—K' are made arcuate corresponding to the segmental shape instead of the straight lines.

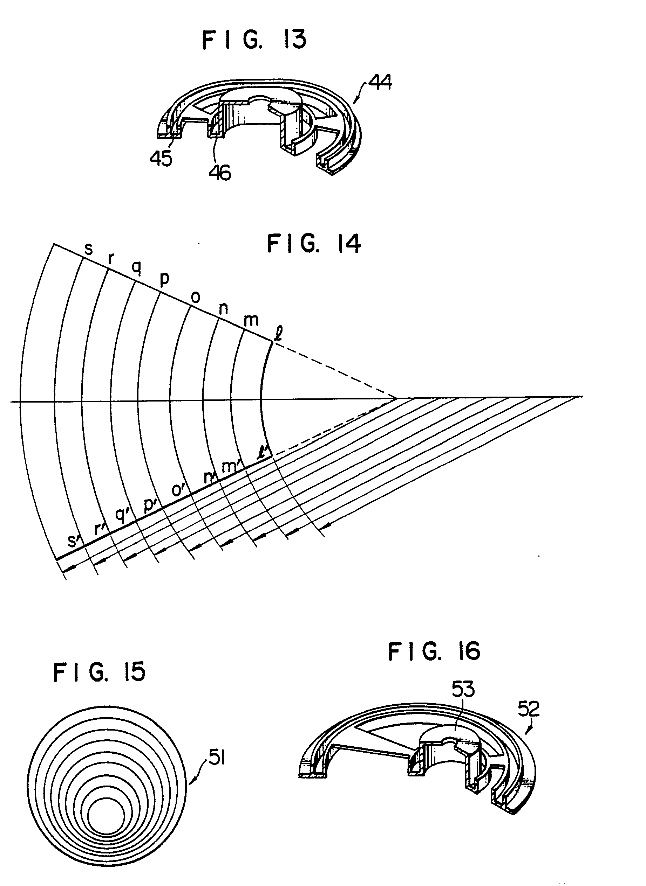

By using a filter material of other shape and forming the lines B—B', C—C' ... K—K' in other suitably selected shapes, it is possible to obtain a filter element of the elongated shape shown in Figure 12, a filter element composed of eccentric circles shown in Figure 15, and a filter element having differences in level at the ends, which is not shown.

The filter element may be modified depending on the support structure for supporting the filter element. Thus further modifications of the filter element will be discussed in connection with the description of the support structure for the filter element presently to be set forth.

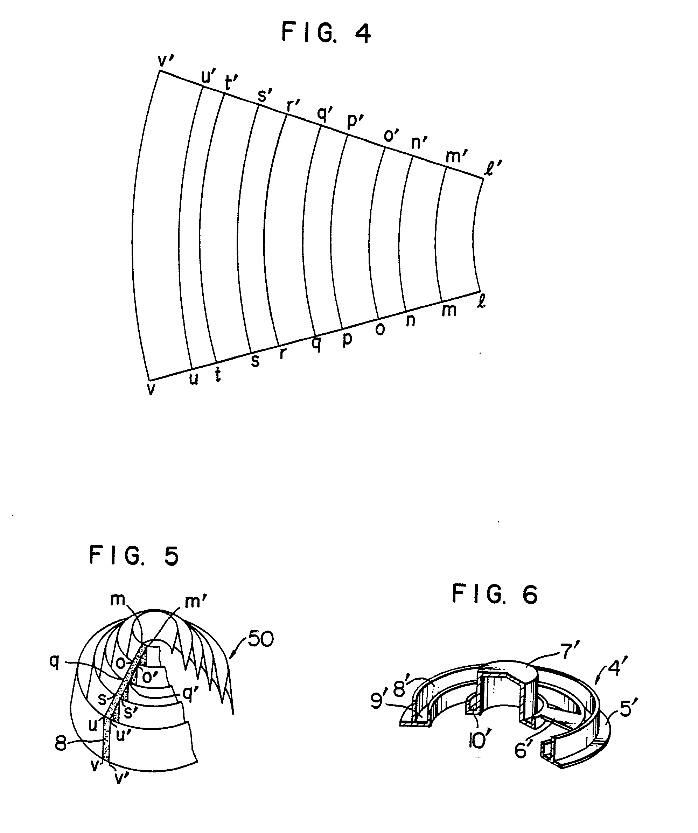

Support devices of various constructional forms will now be described. Because of the support device, the distance between the outer two curved lines and the distance between the inner two curved lines of the filter material shown in Figure 4 are made greater than the distance between the other two curved lines thereof to provide a filter element 50 as shown in Figure 5.

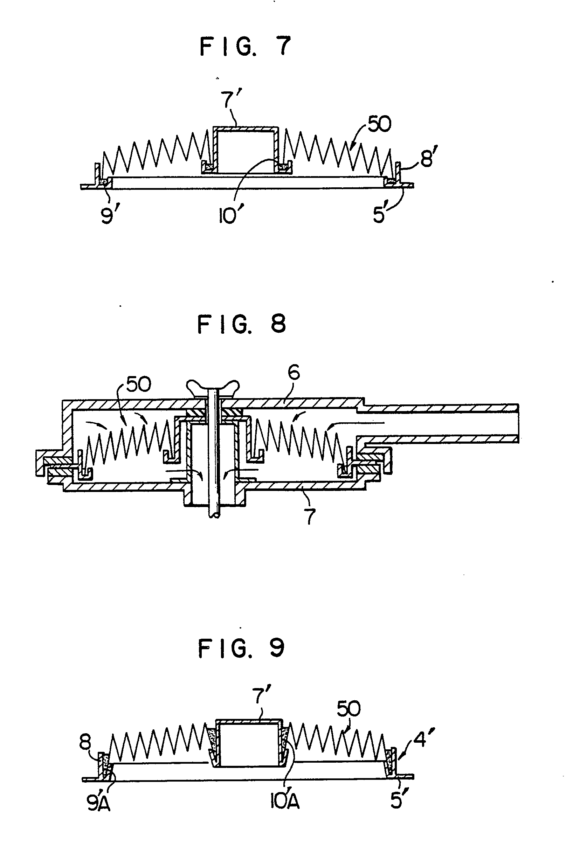

Figures 6 and 7 show a support device 4' for supporting the filter element 50 and which is formed of light weight material, such as a synthetic resinous material, which is easy to form into a shape. The support device 4' includes an outer frame having a circular flange 5', and an inner frame 7' connected to the outer frame through webs 6'. The flange 5' has an annular upstanding wall 8' formed integrally thereon and extending peripherally and having a groove 9' extending annularly along the wall 8'. The inner frame 7' has an annular groove 10' formed along the outer periphery thereof and extending concentrically with the groove 9', so that the filter element 50 has its outermost peripheral portion and innermost peripheral portion received in the groove 9' and 10' respectively as shown in Figure 7. An adhesive agent is filled in the groove 9' and 10' after the outermost peripheral portion and the innermost peripheral portion of the filter element 50 are inserted therein, to seal the filter element 50 as well as to adhesively connect the same to the support device.

The filter element assembly formed as aforesaid is incorporated as in an air cleaner of an automotive vehicle shown in Figure 8. The cleaner has a casing 7 and a cap 6 coupled to each other to define a filter chamber and the filter unit is disposed therein.

Figure 9 shows another constructional form of support structure in which the grooves 9'A and 10'A at the outer periphery and the inner periphery respectively at the support device 4' are each in the form of a letter V in cross-section to conform to the tilting of the outermost peripheral fold and the innermost peripheral fold of the filter element 50.

In the filter elements shown and described hereinabove, the filament material of the segmental shape has been used. It is to be understood that by varying the fundamental shape of the filter material it is possible to provide filter elements of different shapes. Also, by bending and folding the filter paper along folding lines of other shapes than the arcuate shape, it is possible to obtain filter elements of different shapes. The typical of the folding lines will be described hereinafter.

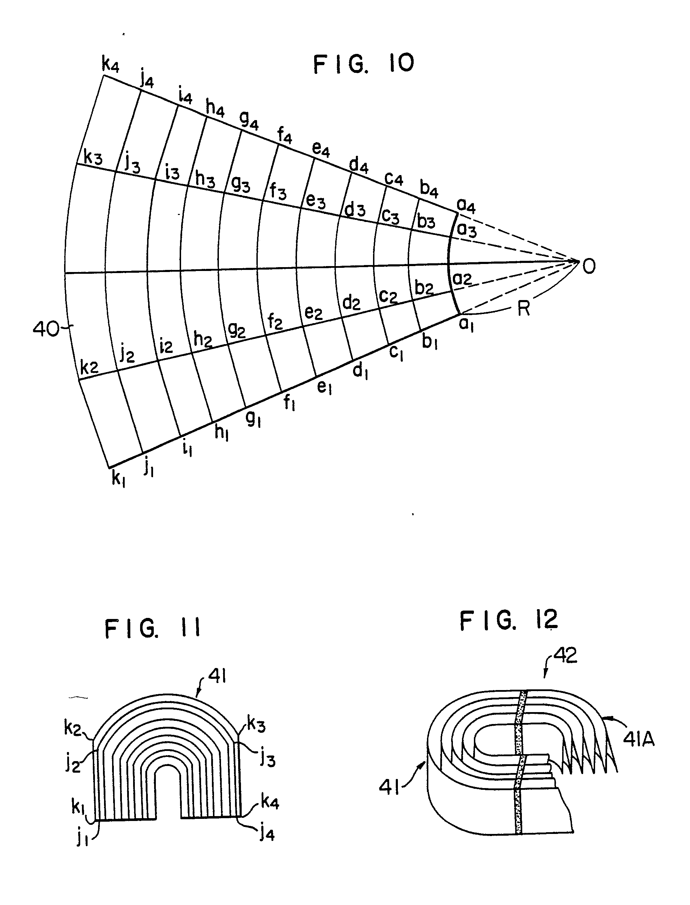

Figure 10 shows a filter material having folding lines $a_1$—$a_2$—$a_3$—$a_4$ ... $k_1$—$k_2$—$k_3$—$k_4$ each being composed of curved and straight lines in combination. By bending and curving the filter material of this shape, it is possible to provide a half-portion of a filter element 41 of the U-shape shown in Figure 11. By connecting to the half-portion of the filter element 41 a half-portion of a filter element 41A identical with the filter element 41, it is possible to obtain a filter element 42 of substantially elliptic shape shown in Figure 12. When the filter element 42 is assembled with a support device 44 of an elliptic and planar shape shown in Fig. 13, it is possible to obtain a filter element assembly of the elliptic shape by sealingly adhering the filter element 42 to the support device 44 at grooves 45 and 46.

Figure 14 shows a filter material bent and curved along folding lines of arcuate shapes l—l' ... s—s' differing from one another in the centre and radius, to obtain a circular filter element 51 comprising a plurality of eccentric circles as shown in Figure 15. The filter element 51 is mounted on a support device 52 having an inner frame 53 which is displaced from the centre of the filter element 51 as shown in Figure 16.

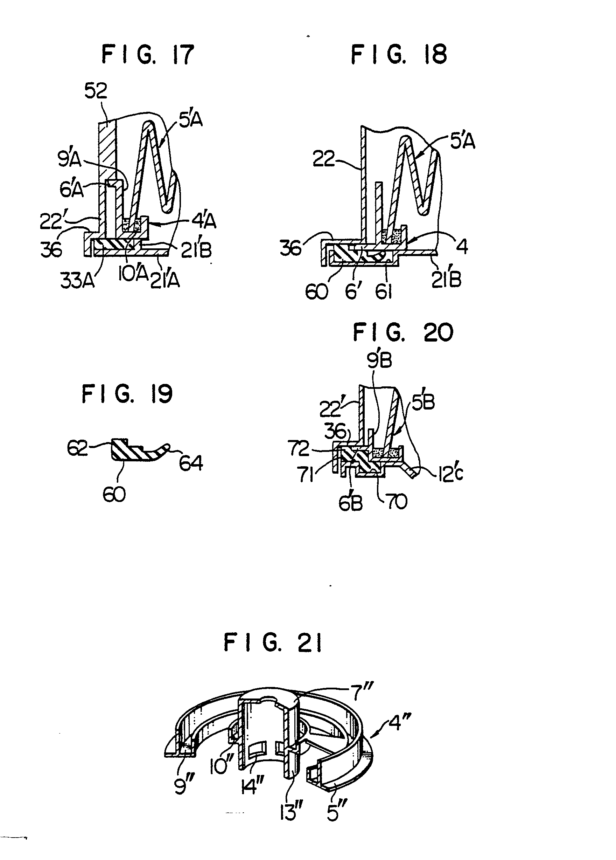

Figures 17 to 20 show other constructional forms of the support device for the filter element which use different periphery support means from that shown in Figure 8 for supporting the filter element 50.

Figure 17 shows one constructional form which, unlike the constructional form shown in Figure 8, uses only one gasket for providing a seal to the outer periphery of the filter element assembly 5'A. In the constructional form shown, the support device of the filter element assembly 5'A includes a flange 6'A extending outwardly from the upper end of a vertical wall 9'A at a level higher than that of the groove 10'A, and a plurality of ribs 52 are formed on the inner wall surface of the cap in positions juxtaposed against the flanges 6'A and peripherally spaced apart from one another. An annular stopper 21'B is attached to the inner side of the outer periphery of the case 21'A in a position corresponding to the outer surface of the bottom of the groove 10'A of the outer frame 4'A, and an annular gasket 33A is mounted on the outer side of the stopper 21'B and on the outer peripheral edge of the case 21'A. The stopper 21'B restricts the amount of compression of the gasket 33A having a flange 36 of the cap 22' positioned in the vicinity of the outer peripheral edge thereof.

In the construction described hereinabove, when the cap 22' is pressed against the case 21'A, the pressing force is exerted from the ribs 52 of the cap 22' through the flange 6'A to the outer frame 4'A, so that the outer frame 4'A is brought into sealing engagement with the gasket 33A and at the same time the flange 36 of the cap 22' is brought into sealing engagement with the gasket 33A. Thus the filter element assembly 5'A is sealed by the single gasket 33A between the cap 22' and case 21'A and between the gasket 33A and the outer peripheral edge of the filter element.

Figures 18 and 19 show another modification in which the outer frame of the support device 4 is sealed at its outer flange 6' by a single gasket 60 which is mounted in a groove 61 formed along the entire outer periphery of the case 21'B and has the underside of the flange 6' of the filter element assembly 5'A in engagement with the surface thereof. The underside of the flange 6' is in engagement with the surface of the case 21'B and its surface has the same function as the stopper 21'B of the modification shown in Figure 17. The gasket 60 is formed on its outer peripheral edge with a protuberance 62 (Fig. 19) which bulges upwardly into engagement with flange 36 of the cap 22. In this modification, the gasket 60 has formed on its inner periphery with a lip 64 engaging the underside of the flange 6' of the filter element assembly 5'A to ensure that a seal is provided to the filter element assembly 5'A.

Figure 20 shows still another modification in which the filter element assembly 5'B has its flange 6'B projecting substantially from the central portion of the upstanding wall 9'B and the case 12'C is substantially in the form of a letter S in a lying position in cross-section in its outer peripheral edge to provide a groove 70 and a support 71. An annular gasket 72 with two offset portions is mounted on the case 12'C in a manner to cover the groove 70 and support 71 at its outer peripheral edge. Thus the cap 22' engages at its flange 36 the surface of the outermost periphery of the gasket 72 which engages at its two offset portions the underside of the flange 6'B of the filter element assembly 5'B and a half-portion of the underside of the groove 70 while the other half-portion of the underside of the groove 70 engages the surface of the case body 12'C. The surface of the case body 12'C has the same function as the stopper 21'B of the modification shown in Figure 17.

In the modification shown and described hereinabove, it is possible to provide a seal effectively between the case and the outer periphery of the filter element assembly and between the case and cap by using a single gasket, thereby enabling the number of the parts to be decreased.

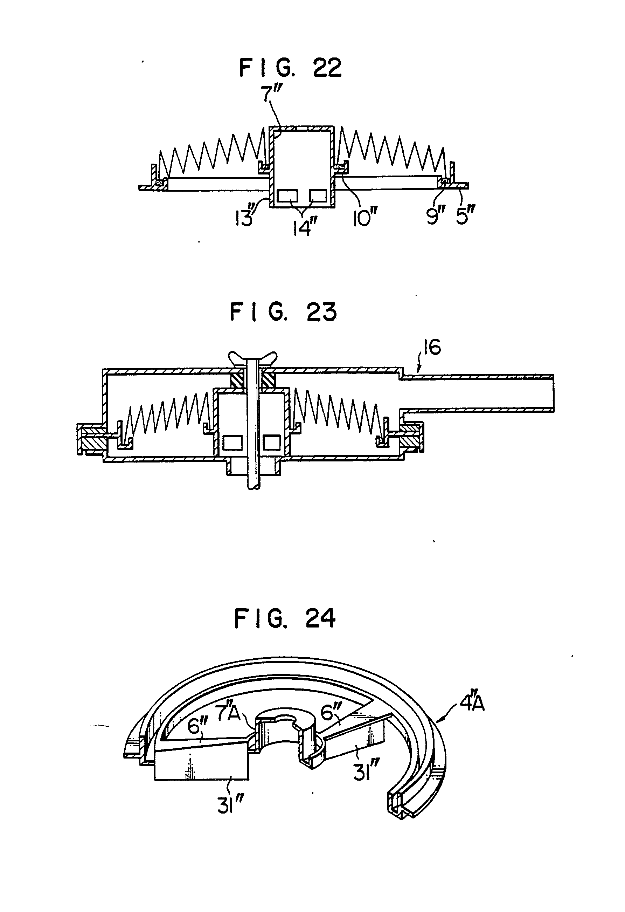

Figures 21 to 24 show modifications of the support device. When the filter element 50 shown in Figure 5 is attached to the support device 4'' shown in Figure 21, the filter element assembly shown in Figure 22 is obtained. As is clearly shown in Figures 21, 22, a lower end 13'' of the inner frame 7'' extends downwardly of the level of the flange 5'' and is formed at its side with a plurality of openings 14''. A groove 10'' is formed along the entire periphery of the inner frame 7'' in a position above the openings 14'' in which the groove 10'' is concentric with the groove 9'' formed on the inner surface of the outer upstanding wall. The filter element assembly of the aforesaid construction is incorporated in an, air cleaner 16 as shown in Figure 23.

Figure 24 shows another modification in which the inner frame 7''A does not extend downwardly below the outer frame 4''A and vertical arrangement support elements 31'' are each attached to the underside of one of webs 6''. When the filter element assembly is incorporated in an air cleaner of the same type as that shown in Figure 23, the support elements 31'' support the central portion of the filter element assembly in the same manner as the lower end 13'' of the inner frame 7'' shown in Figures 22, 23.

In the embodiments and modifications according to the invention shown and described hereinabove, the filter element assembly has been described as being incorporated in an air cleaner of an automotive vehicle. However, the invention is not limited to the filter element exclusively used with an air cleaner of an automotive vehicle and the filter element can, of course, be used with a fuel oil cleaner and other cleaners for use with air conditioning systems.

## Claims

1. A fluid cleaner system comprising a casing (7) and a cap (6) coupled to each other for defining a filter chamber; and a filter unit disposed in said filter chamber and having a filter element (50) consisting of at least one folded sheet of filter material, said filter element (50) having a wave form in radial sectional view, the waves being annularly arranged, characterized in that the filter element (50) is supported on a support device (4') which supports the filter element (50) in the filter chamber, the support device (4') comprising an inner frame (7') having an inverted cup-like shape having an extension on the outer side of its wall, said extension having an annular groove (10') with upstanding side walls, said support device (4') further comprising an outer frame having an annular groove (9') with upstanding side walls (8') and having a circular flange (5') extending radially outwardly from the outer wall of said annular groove (9'), said circular flange (5') being interposed between the outer circular peripheral portions of said casing (7) and cap (6), the outer and inner frames being connected by a plurality of webs (6'), the inner free end and the outer free end of the wave form of the filter element (50) extending in a downward direction and being supported in the annular groove (10', 9') of the respective inner and outer frame.

2. A fluid cleaner system as claimed in claim 1, wherein the lower end portion (13'' in Figure 22) of the inner frame extends downwardly beyond said annular groove (10'') and abutting on said casing for axially securing said inner frame.

3. A fluid cleaner system as claimed in claim 2, wherein said lower end portion has a plurality of apertures (14'' in Figures 21, 22) on the side wall thereof.

4. A fluid cleaner system as claimed in claim 1, wherein each of said plurality of webs has a vertical rib (31'' in Figure 24) extending downwardly and abutting on said casing for axially securing said support device.

5. A fluid cleaner system as claimed in claim 1, further comprising seal means extending along the periphery of said casing and including a single gasket (33A in Figure 17), said circular outer flange (6'A) of the outer frame extending outwardly from the upper end of the outer vertical wall of said outer annular groove (10'A), said cap having a plurality of ribs (52) formed on the inner surface of the cap vertical wall and having a flange (36) positioned near the lower edge of the cap, said casing having an annular stopper (21'B) projected upwardly from the upper surface of the casing and positioned correspondingly to said outer annular groove (10'A), said outer flange (6'A) of the outer frame abutting on said ribs (52) of the cap, and said stopper (21'B) of the casing abutting on the bottom wall of said outer annular groove (10'A) of the outer frame, said single gasket contacting with said flange (36) of the cap and the bottom wall of said outer annular groove (10'A) on one side of the gasket, and with the upper peripheral surface of the casing on the other side.

6. A fluid cleaner system as claimed in claim 1, further comprising seal means extending along the periphery of said casing and including a single gasket having a lip (64 in Figure 19) formed on the inner periphery thereof, said circular outer flange (6' in Figure 18) of the outer frame extending outwardly from the bottom of said outer annular groove, said cap having a flange (36) positioned near the lower edge of the cap, said casing having an annular groove (61) formed along the outer periphery of the casing, said flange (36) of the cap abutting on said outer flange (6') of the outer frame, and the bottom wall of the outer annular groove of the outer frame abutting on the upper surface of the casing, said single gasket contacting with said flange of the cap and said circular flange (6') on one side of the gasket, and with the bottom of the annular groove (61) of the casing on the other side, said lip of the gasket further contacting with said circular flange (6') of the outer frame for ensuring sealing.

7. A fluid cleaner system as claimed in claim 1, further comprising seal means extending along the periphery of said casing and including a single gasket, said cap having an outwardly extending flange (36 in Figure 20) near the lower edge thereof, said outer frame having a flange (6'B) projecting substantially from the central portion of the upstanding outside wall,

said casing being substantially in the form of a letter S in a lying position in cross-section in its outer periphery to provide a groove (70) and a support (71),

said annular gasket having two offset portions and being mounted on the case (12'C) in a manner to cover the groove (70) and support (71) at its outer periphery,

said cap engaging at its flange (36) with the surface of the outermost periphery of the gasket (72) which engages at its two offset portions with the underside of the flange (6'B) of the outer frame and a half-portion of the underside of the outer annular groove of the outer frame while the other half-portion of the underside of the outer annular groove engages with the surface of the case body (12'C).

## Patentansprüche

1. Fluidreinigungsanlage mit einem Gehäuse (2) und einer Abdeckung (6), die derart aneinander befestigt sind, daß sie eine Filterkammer ausbilden, und einer Filtereinheit, die innerhalb der Filterkammer angeordnet ist und ein Filterteil (50) aus zumindest einem gefalteten Blatt aus Filterwerkstoff aufweist, wobei das Filterteil (50) im Radialquerschnitt wellenförmig mit ringförmig angeordneten Wellen ist, dadurch gekennzeichnet, daß das Filterteil (50) auf eine Halteeinrichtung (4') gestützt ist, die das Filterteil (50) in der Filterkammer lagert und einen umgekehrt becherförmigen Innenrahmen (7') aufweist, der auf der Außenseite seiner Wandung eine Verlängerung aufweist, die mit einer Ringnut (10') mit aufrecht stehenden Seitenwänden ausgebildet ist, wobei die Halteeinrichtung (4') weiterhin einen Außenrahmen aufweist, der eine Ringnut (9') mit aufrechten Seitenwänden (8') und einen Ringflansch (5'), der sich radial auswärts der Außenwand der Ringnut (9') erstreckt, aufweist, wobei der Ringflansch (5') zwischen den Außenkreisabschnitten des Gehäuses (7) und der Abdeckung (6) angeordnet ist, der Außen- und der Innenrahmen mittels einer Vielzahl Stege (6') verbunden sind und das innere freie Ende und das äußere freie Ende des wellenförmigen Filterteils (50) sich nach unten gerichtet erstreckt und in der Ringnut (10', 9') des entsprechenden Innen- bzw. Außenrahmens gelagert ist.

2. Fluidreinigungsanlage nach Anspruch 1, bei der der untere Endabschnitt (13'' in Fig. 22) des Innenrahmens sich bis unter die Ringnut (10'') nach unten erstreckt und zur axialen Befestigung des Innenrahmens mit dem Gehäuse in Anlage ist.

3. Fluidreinigungsanlage nach Anspruch 2, bei der der untere Endabschnitt eine Vielzahl Öffnungen (14'' in Fig. 21, 22) auf seiner Seitenwand hat.

4. Fluidreinigungsanlage nach Anspruch 1, bei der jeder der Vielzahl Stege eine vertikale Rippe (31'' in Fig. 24) aufweist, die sich nach unten erstreckt und zur axialen Sicherung der Halteeinrichtung in Anlage an dem Gehäuse ist.

5. Fluidreinigungsanlage nach Anspruch 1, die weiterhin ein Dichtungselement aufweist, das sich längs dem Umfang des Gehäuses erstreckt und einen einzelnen Dichtungsring (33A in Fig. 17) umfaßt, wobei der ringförmige Außenflansch (6'A) des Außenrahmens außerhalb des Oberendes der äußeren vertikalen Wand der äußeren Ringnut (10'A) verläuft, wobei die Abdeckung eine vielzahl Rippen (52), die auf der Innenfläche der vertikalen Abdeckungswand angeordnet sind, und einen Flansch (36) hat, der nahe der Unterkante der Abdeckung angeordnet ist, wobei das Gehäuse einen Ringanschlag (21'B) aufweist, der von der Oberfläche des Gehäuses nach oben vorsteht und entsprechend der äußeren Ringnut (10'A) angeordnet ist, wobei der Außenflansch (6'A) des Außenrahmens an den Rippen (52) der Abdeckung und der Ringanschlag (21'B) des Gehäuses an der Bodenwand der äußeren Ringnut (10'A) des Außenrahmens anliegt, wobei der einzelne Dichtungsring mit dem Flansch (36) der Abdeckung und der Bodenwand der äußeren Ringnut (10'A) auf einer Seite des Dichtungsrings in Anlage ist und wobei der Dichtungsring auf der anderen Seite mit der oberen Umfangsfläche des Gehäuses in Anlage ist.

6. Fluidreinigungsanlage nach Anspruch 1, die weiterhin ein Dichtungselement aufweist, das sich längs dem Umfang des Gehäuses erstreckt und einen einzelnen Dichtungsring mit einer Lippe (64 in Fig. 19) aufweist, die auf seinem Innenumfang ausgebildet ist, wobei der ringförmige Außenflansch (6' in Fig. 18) des Außenrahmens außerhalb des Bodens der äußeren Ringnut verläuft, wobei die Abdeckung einen Flansch (36) aufweist, der nahe der Unterkante der Abdeckung angeordnet ist, wobei das Gehäuse eine Ringnut (61) aufweist, die längs dem äußeren Umfang des Gehäuses ausgebildet ist, wobei der Flansch (36) der Abdeckung gegen den Außenflansch (6') des Außenrahmens stößt und die Bodenwand der äußeren Ringnut des Außenrahmens in Anlage mit der oberen Fläche des Gehäuses ist, wobei der einzelne Dichtungsring einseitig in Anlage mit dem Flansch der Abdeckung und dem Ringflansch (6') ist und mit der anderen Seite an der Bodenwand der Ringnut (61) des Gehäuses anliegt und wobei die Lippe des Dichtungsrings zur Sicherung der Dichtungswirkung weiterhin mit dem Ringflansch (6') des Außenrahmens in Anlage ist.

7. Fluidreinigungsanlage nach Anspruch 1, die weiterhin ein Dichtungselement aufweist, das sich längs dem Umfang des Gehäuses erstreckt und einen einzelnen Dichtungsring umfaßt, wobei die Abdeckung einen sich nach außen ersteckenden Flansch (36 in Fig. 20) nahe ihrer Unterkante aufweist, wobei der Außenrahmen einen Flansch (6'B) aufweist, der etwa vom Mittelabschnitt der aufrecht stehenden Außenwand vorsteht, wobei das Gehäuse im Querschnitt an seinem äußeren Umfang etwa die Ausbildung eines liegenden S aufweist, so daß es eine Nut (70) und eine Halteteil (71) ausbildet, wobei der Dichtungsring zwei abstehende Abschnitte aufweist und an dem Gehäuse (12'C) derart befestigt ist, daß er die Nut (70) und das Halteteil (71) an seinem Außenrand abdeckt, und wobei die Abdeckung an ihrem Flansch (36) mit der Oberfläche des äußersten Rands des Dichtungsrings (72) verbunden ist, der mit seinen beiden abstehenden Abschnitten mit der Unterseite des Flansches (6'B) des Außenrahmens und einem Halbabschnitt der Unterseite der äußeren Ringnut des Außenrahmens verbunden ist, während der andere Halbabschnitt der Unterseite der äußeren Ringnut mit der Oberfläche des Gehäuseteils (12'C) verbunden ist.

## Revendications

1. Système de purification de fluides, comprenant un boîtier (7) et un capuchon (6) accouplés l'un à l'autre pour délimiter une chambre de filtration; et une unité de filtration logée dans ladite chamber de filtration et possédant un élément de filtration (50) consistant en au moins une feuille repliée de matériau filtrant, ledit élément de filtration (50) ayant une forme ondulée observé en coupe radiale, les ondulations étant agencées annulairement, caractérisé en ce que l'élément de filtration (50) est supporté par un dispositif de support (4') qui supporte l'élément de filtration (50) dans la chambre de filtration, le dispositif de support (4') comprenant un cadre interne (7') ayant la forme d'une coupe inversée possédant un prolongement sur la face externe de sa paroi, ledit prolongement présentant une gorge annulaire (10') à parois latérales dressées à la verticale, ledit dispositif de support (4') comportant en outre un cadre externe ayant une gorge annulaire (9') à parois latérales (8') dressées à la verticale et présentant une collerette circulaire (5') s'étendant radialement vers l'extérieur à partir de la paroi externe de ladite gorge annulaire (9'), ladite collerette circulaire (5') étant interposée entre les régions périphériques circulaires externes desdits boîtier (7) et capuchon (6), les cadres externe et interne étant reliés par plusieurs membrures (6'), l'extrémité libre interne et l'extrémité libre externe de la configuration ondulée de l'élément de filtration (50) s'étendant vers le bas et étant supporté dans la gorge annulaire (10', 9') du cadre respectivement interne et externe.

2. Système de purification de fluides selon la revendication 1, dans lequel la région extréme inférieure (13'' sur la figure 22) du cadre interne s'étend vers le bas au-delà de ladite gorge annulaire (10'') et bute sur ledit boîtier afin d'assujettir axialement ledit cadre interne.

3. Système de purification de fluides selon la revendication 2, dans lequel ladite région extréme inférieure présente plusieurs orifices (14'' sur les figures 21, 22) sur sa paroi latérale.

4. Système de purification de fluides selon la revendication 1, dans lequel chacune de ladite pluralité de membrures comporte une nervure verticale (31'' sur la figure 24) s'étendant vers le bas et butant contre ledit boîtier pour assujettir axialement ledit dispositif de support.

5. Système de purification de fluides selon la revendication 1, comportant en outre un moyen d'étanchéité s'étendant le long de la périphérie dudit boîtier et comprenant une garniture unique (33A sur la figure 17),
ladite aile circulaire externe (6'A) du cadre externe s'étendant vers l'extérieur à partir de l'extrémité supérieure de la paroi verticale externe de ladite gorge annulaire externe (10'A),
ledit capuchon possédant plusieurs membrures (52) formées sur la surface interne de la paroi verticale du capuchon et ayant une aile (36) située à proximité de l'arête inférieure de la coupe,
ledit boîtier possédant une butée annulaire (21'B) en saillie vers le haut à partir de la surface supérieure du boîtier et occupant une position correspondant à ladite gorge annulaire externe (10'A),
ladite aile externe (6'A) du cadre externe butant contre lesdites membrures (52) du capuchon, et ladite butée (21'B) du boîtier portant contre la paroi du fond de ladite gorge annulaire externe (10'A) du cadre externe,
ladite garniture unique étant en contact avec ladite aile (36) du capuchon et la paroi de fond de ladite gorge annulaire externe (10'A) sur l'une des côtés de la garniture, et avec la surface périphérique supérieure du boîtier sur l'autre côté.

6. Système de purification de fluides selon la revendication 1, comportant en outre un moyen d'étanchéité s'étendant le long de la périphérie dudit boîtier et comprenant en une garniture unique ayant une lèvre (64 sur la figure 19) formée sur sa périphérie interne,
ladite collerette circulaire externe (6' sur la figure 18) du cadre externe s'étendant ver l'extérieur à partir du fond de ladite gorge annulaire externe,
ledit capuchon possédant une aile (36) située à proximité de l'arête inférieure du capuchon,
ledit boîtier présentant une gorge annulaire (61) formée le long de la périphérie externe du boîtier,
ladite aile (36) du capuchon étant en butée contre ladite collerette externe (6') du cadre externe, et la paroi de fond de la gorge annulaire externe du cadre externe butant contre la surface supérieure du boîtier,
ladite garniture unique étant en contact avec ladite aile du capuchon et ladite collerette circulaire (6') sur l'un des côtés de la garniture, et avec le fond de la gorge annulaire (61) du boîtier sur l'autre côté,
ladite lèvre de la garniture étant par ailleurs en contact avec ladite collerette circulaire (6') du cadre externe, afin d'assurer l'étanchéité.

7. Système de purification de fluides selon la revendication 1, comportant en outre un moyen d'étanchéité s'étendant le long de la périphérie dudit boîtier et comprenant une garniture unique,
ledit possédant une aile s'étendant vers

l'extérieur (36 sur la figure 20) à proximité de son arête inférieure,

ledit cadre externe possédant une collerette (6'B) sensiblement en saillie à partir de la zone centrale de la paroi externe verticale,

ledit boîtier présentant sensiblement la forme d'un S couché observé en coupe dans sa périphérie externe, afin de former une gorge (70) et un support (71),

ladite garniture annulaire possédant deux régions déportées et étant montée sur le boîtier (12'C) de façon à coiffer la gorge (70) et le support (71) à sa périphérie externe,

ledit capuchon étant en contact, par son aile (36), avec la surface de la périphérie externe extrême de la garniture (72) qui coopèrere par ses deux régions déportées avec la face inférieure de la collerette (6'B) du cadre externe et une moitié de la face inférieure de la gorge annulaire externe du cadre externe, tandis que l'autre moitié de la face inférieure de la gorge annulaire externe coopère avec la surface du corps du boîtier (12'C).

# FIG. 1

# FIG. 2

# FIG. 3

# FIG. 4

# FIG. 5

# FIG. 6

# FIG. 7

# FIG. 8

# FIG. 9

0 059 562

# FIG. 10

# FIG. 11

# FIG. 12

4

## F I G. 13

## F I G. 14

## F I G. 15

## F I G. 16

# F I G. 17

52
5'A
9'A
6'A
22'
36
4'A
21'B
33A
10'A
21'A

# F I G. 18

22
5'A
36
4
60
6'
61
21'B

# F I G. 19

62
64
60

# F I G. 20

9'B
22'
5'B
36
72
71
12'c
6'B
70

# F I G. 21

7"
4"
9"
10"
14"
13"
5"

# F I G. 22

7″

13″  14″  10″  9″ 5″

# F I G. 23

16

# F I G. 24

6″  7″A  6″  4″A

31″  31″